(19) Europäisches Patentamt
European Patent Office
Office européen des brevets

(11) **EP 3 013 668 B1**

(12) **EUROPÄISCHE PATENTSCHRIFT**

(45) Veröffentlichungstag und Bekanntmachung des Hinweises auf die Patenterteilung:
**09.08.2017 Patentblatt 2017/32**

(21) Anmeldenummer: **14734100.2**

(22) Anmeldetag: **25.06.2014**

(51) Int Cl.:
***B62D 15/02*** *(2006.01)*

(86) Internationale Anmeldenummer:
**PCT/EP2014/063363**

(87) Internationale Veröffentlichungsnummer:
**WO 2014/207026 (31.12.2014 Gazette 2014/53)**

(54) **AUTOMATISIERTER EINPARKVORGANG MIT ZUSÄTZLICHEM KORREKTURZUG**

AUTOMATIC PARKING PROCEDURE WITH A SUPPLEMENTARY CORRECTION PASS

PROCEDURE DE PARCAGE AUTOMATIQUE AVEC UNE PASSE DE CORRECTION SUPPLEMENTAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.06.2013 DE 102013212318**

(43) Veröffentlichungstag der Anmeldung:
**04.05.2016 Patentblatt 2016/18**

(73) Patentinhaber: **Bayerische Motoren Werke Aktiengesellschaft**
**80809 München (DE)**

(72) Erfinder: **GOLDMANN, Thomas**
**95445 Bayreuth (DE)**

(56) Entgegenhaltungen:
**EP-A2- 2 090 498     EP-A2- 2 444 302**
**EP-A2- 2 471 696     DE-A1-102009 025 328**
**DE-A1-102011 084 479     GB-A- 2 473 551**

EP 3 013 668 B1

**Beschreibung**

Die Erfindung betrifft ein Verfahren und ein entsprechendes Parkassistenzsystem zum Durchführen eines automatisierten Einparkvorgangs eines Kraftfahrzeugs in eine parallel zur Straßenrichtung angeordnete Längsparklücke, wobei das Fahrzeug die Längs- und Querbewegung des Fahrzeugs selbstständig steuert.

Bei Parkassistenzsystemen mit automatisierter Querführung, d. h. mit selbstständiger Steuerung der Querbewegung des Fahrzeugs, wird die Lenkung des Fahrzeugs während des Einparkvorgangs in eine Längsparklücke vom Parkassistenzsystem übernommen. Die Längsführung muss der Fahrer durch entsprechendes Gasgeben und Bremsen selbst übernehmen. Bei Parkassistenzsystemen mit automatisierter Quer- und Längsführung wird auch diese Aufgabe der Längsführung vom Parkassistenzsystem übernommen; das Fahrzeug steuert die Längs- und Querbewegung des Fahrzeugs selbstständig. Bei derartigen Parkassistenzsystemen mit automatisierter Quer- und Längsführung hat der Fahrer im Allgemeinen die Möglichkeit, per Knopfdruck das Fahrzeug selbstständig einparken und optional ausparken lassen zu können.

Ein beispielhaftes Parkassistenzsystem mit automatisierter Quer- und Längsführung ist in der Druckschrift "Parkassistent mit Längs- und Querführung", Dirk Ahrens, 5. Tagung Fahrerassistenz der TU München, München, 2012 beschrieben.

Ein weiteres Parkassistenzsystem mit automatisierter Quer- und Längsführung ist in der Druckschrift WO 2006/050710 beschrieben. DE102011084479 ist als nächstliegender Stand der Technik nach dem Oberbegriff des Anspruchs 1 zu sehen. Bei gängigen Parkassistenzsystemen mit automatisierter Quer- und Längsführung wird das Fahrzeug in einem oder mehreren Zügen in eine Parkendposition in der Längsparklücke bewegt, bei der das Fahrzeug in Längsrichtung im Wesentlichen parallel zu einer seitlichen Begrenzungslinie der Längsparklücke ausgerichtet ist und einen zulässigen Abstand zur seitlichen Begrenzungslinie der Längsparklücke aufweist. Die seitliche Begrenzungslinie wird beispielsweise durch den Bordsteig gebildet. Nachteilig hieran ist, dass der Einparkvorgang unabhängig von der Längsausrichtung der Fahrzeugs in der Längsparklücke beendet wird; es wird lediglich der Abstand zur seitlichen Begrenzungslinie (d. h. typischerweise der Bordsteinabstand), die Fahrzeugverdrehung (d. h. ob der Fahrzeug parallel zur seitlichen Begrenzungslinie ausgerichtet ist) bewertet. Da die Längsausrichtung des Fahrzeugs in der Parklücke beim Beenden des Einparkvorgangs nicht berücksichtigt wird, wird unnötig viel Parkraum verschwendet. Wenn beispielsweise beim Einparken des Fahrzeugs in einer großen Parklücke das Fahrzeug in der Mitte der Parklücke als Parkendposition zum Stehen kommt, wird unnötig Parkraum vor und hinter dem Fahrzeug verschenkt.

Außerdem kann das spätere manuelle Ausparken für den Fahrer schwierig sein, wenn in der Parkendposition der Abstand zwischen der Front des Fahrzeugs und dem Heck des parkenden vorderen Begrenzungsfahrzeugs gering ist.

Es ist Aufgabe der Erfindung, ein in Hinblick auf diese Nachteile verbessertes Verfahren zur Durchführung eines automatisierten Einparkvorgangs mit automatisierter Quer- und Längsführung und ein entsprechendes Parkassistenzsystem anzugeben.

Die Aufgabe wird durch die Merkmale der unabhängigen Patentansprüche gelöst. Vorteilhafte Ausführungsformen sind in den abhängigen Ansprüchen beschrieben.

Ein erster Aspekt der Erfindung betrifft ein Verfahren zum Durchführen eines automatisierten Einparkvorgangs eines Kraftfahrzeugs in eine Längsparklücke, wobei das Fahrzeug die Längs- und Querbewegung des Fahrzeugs selbstständig steuert und dabei das Fahrzeug in einem oder mehreren Zügen in eine ausgerichtete Position in der Längsparklücke bewegt wird, bei der das Fahrzeug in Längsrichtung im Wesentlichen parallel zu einer seitlichen Begrenzungslinie der Längsparklücke ausgerichtet ist und einen zulässigen Abstand zur seitlichen Begrenzungslinie der Längsparklücke aufweist. Diese ausgerichtete Position entspricht der Parkendposition bei konventionellen Parkassistenzsystemen mit automatisierter Quer- und Längsführung.

Das erfindungsgemäße Verfahren kennzeichnet sich dadurch, dass in der ausgerichteten Position (in der sich das Fahrzeug vorzugsweise im Stillstand befindet) der Abstand zu einem vorderen Begrenzungsobjekt (häufig: vorderes Begrenzungsfahrzeug) der Parklücke bestimmt wird und dann abstandsabhängig das Fahrzeug einen zusätzlicher Korrekturzug durchführt, bei dem sich das Fahrzeug mit einem Lenkwinkel von im Wesentlichen null Grad in Vorwärtsrichtung oder Rückwärtsrichtung selbstständig gesteuert bewegt. Ein Lenkwinkel von im Wesentlichen null Grad bedeutet, dass sich das Fahrzeug in Vorwärtsrichtung oder Rückwärtsrichtung entlang der Längsrichtung des Fahrzeugs bewegt.

Durch den vorgeschlagenen zusätzlichen Korrekturzug kann eine optimale Längsausrichtung in der Parklücke erzielt werden. Hierdurch kann der Parkraumbedarf gering gehalten und darüber hinaus kann ein solcher Abstand zum vorderen Begrenzungsfahrzeug erzielt werden, der das spätere Ausparken erleichtert, wenn der Einparkvorgang nicht zu nah an dem vorderen Begrenzungsobjekt beendet wird. Erfindungsgemäß wird in einem zusätzlichen Korrekturzug mit null Grad Lenkwinkel der Abstand des Fahrzeugs auf einen vorgegebenen Ziel-Abstand zum vorderen Begrenzungsobjekt (häufig vorderes Begrenzungsfahrzeug) korrigiert. Beispielsweise entspricht der vorgegebene Ziel-Abstand einem Wert im Bereich von 50 cm bis 110 cm, insbesondere im Bereich von 70 cm bis 90 cm, beispielsweise 80 cm. Bei einer Korrektur des Abstands zum vorderen Begrenzungsobjekt auf einen vorgegebenen Ziel-Abstand im Bereich von 70 cm bis 90 cm wird der vorhandene Parkraum gut ausgenutzt und gleichzeitig ein ausreichender Abstand zum vorderen Begrenzungsobjekt gelassen, so dass das spätere Ausparken in einem Zug (d. h. ohne ein Rücksetzen des Fahrzeugs) leicht möglich ist.

Die Korrektur des Abstands kann je nach Abstand zum vorderen Begrenzungsobjekt entweder durch ein Vorwärtsrangieren oder durch ein Rückwärtsrangieren mit null Grad Lenkwinkel erfolgen. Im ersten Fall schließt das Fahrzeug auf einen vorgegebenen Ziel-Abstand zum vorderen Begrenzungsobjekt auf.

In der ausgerichteten Position wird gemäß einer vorteilhaften Ausführungsform geprüft, ob der Abstand zu dem vorderen Begrenzungsobjekt größer (oder bei einer alternativen Ausführungsform: größer gleich) als ein erster Schwellwert ist (beispielsweise 1,1 m) ist; das Fahrzeug befindet sich in diesem Fall (im Folgenden Fall 1 genannt) zu weit weg von dem vorderen Begrenzungsobjekt. In diesem Fall 1 steuert das Fahrzeug im Rahmen des Korrekturzugs in Vorwärtsrichtung mit automatisierter Quer- und Längsführung selbstständig auf das vordere Begrenzungsobjekt zu und verringert dabei den Abstand zu dem vorderen Begrenzungsobjekt.

Wenn der Abstand zu dem vorderen Begrenzungsobjekt hingegen kleiner oder in einer alternativen Ausführungsform kleiner gleich als ein vorgegebener dritter Schwellwert (beispielsweise 0,5 m) ist und sich somit das Fahrzeug zu nah an dem vorderen Begrenzungsobjekt befindet, steuert in diesem Fall (im Folgenden Fall 2 genannt) das Fahrzeug im Rahmen des Korrekturzugs mit automatisierter Quer- und Längsführung selbstständig in Rückwärtsrichtung von dem vorderen Begrenzungsobjekt weg.

Der dritte Schwellwert (beispielsweise 0,5 m) ist hierbei vorzugsweise kleiner als der erste Schwellwert (beispielsweise 1,1 m), so dass sich ein Zwischenbereich zwischen dem ersten und dem zweiten Schwellwert ergibt. Es wäre aber auch denkbar, dass der dritte Schwellwert dem ersten Schwellwert entspricht.

Vorzugsweise wird - sofern der Fall 1 vorliegt und in der ausgerichteten Position der Abstand zu dem vorderen Begrenzungsobjekt größer bzw. größer gleich als der erste Schwellwert ist - das Fahrzeug im Rahmen des Korrekturzugs solange in Vorwärtsrichtung auf das vordere Begrenzungsobjekt zusteuert, bis der Abstand zum vorderen Begrenzungsobjekt einen zweiten Schwellwert (z. B. 0,9 m) erreicht, sofern in diesem Moment gleichzeitig der Abstand zu dem hinteren Begrenzungsobjekt eine bestimmte Bedingung erfüllt. Der zweite Schwellwert (z. B. 0,9 m) ist hierbei kleiner als der erste Schwellwert (z. B. 1,1 m), da sich das Fahrzeug in Vorwärtsrichtung auf das vordere Begrenzungsobjekt zubewegt. Wenn dieser zweite Schwellwert erreicht wird und die Bedingung in Bezug auf den Abstand zu dem hinteren Begrenzungsobjekt erfüllt ist, wird das Zusteuern auf das vordere Begrenzungsobjekt beendet; es wird dann beispielsweise das Antriebsmoment auf null oder auf einen negativen Wert reduziert und ein Bremsmoment über die Betriebsbremse eingestellt, um das Fahrzeug zu stoppen; das Fahrzeug kommt aber vorzugsweise nicht unmittelbar zum Stillstand, sondern wird sich aufgrund der Trägheit des Fahrzeugs nach Erreichen des zweiten Schwellwerts noch um eine gewisse Strecke $\Delta s$ in Vorwärtsrichtung bewegen, beispielsweise um ca. 10 cm. In diesem Fall würde sich ein End-Abstand (z. B. 0,8 m) zum vorderen Begrenzungsfahrzeug ergeben, der dem zweiten Schwellwert vermindert um $\Delta s$ entspricht. Alternativ wäre es auch denkbar, dass das Fahrzeug mit stetig auf null abnehmender Geschwindigkeit auf den zweiten Schwellwert für den Abstand zum vorderen Begrenzungsfahrzeug zusteuert, so dass das Fahrzeug bei Erreichen des zweiten Schwellwerts gleichzeitig zum Stehen kommt.

Als Bedingung in Bezug auf den Abstand zu dem hinteren Begrenzungsobjekt kann beispielsweise geprüft werden, ob (bei Erreichen des zweiten Schwellwerts seitens des Abstands zum vorderen Begrenzungsobjekt) der aktuelle Abstand zu dem hinteren Begrenzungsobjekt im Wesentlichen größer oder größer gleich als der aktuelle Abstand zum vorderen Begrenzungsobjekt ist. Hierbei kann eine optionale Toleranz berücksichtigt werden, so dass dann geprüft wird, ob der Abstand zu dem hinteren Begrenzungsobjekt zuzüglich der Toleranz (beispielsweise 0,1 m Toleranz) größer bzw. größer gleich als der aktuelle Abstand zum vorderen Begrenzungsobjekt ist. In diesem Fall wird dann bei Erreichen des zweiten Schwellwerts das Fahrzeug das Zusteuern auf das vorderer Begrenzungsobjekt beenden; ansonsten wird das Fahrzeug weiter auf das vordere Begrenzungsobjekt zusteuern. Das Fahrzeug wird nach Unterschreitung des zweiten Schwellwerts seitens des Abstands zum vorderen Begrenzungsobjekt weiter auf das vordere Begrenzungsobjekt in Vorwärtsrichtung zusteuern, bis im Wesentlichen (d. h. zum Beispiel unter optionaler Berücksichtigung einer Toleranz von beispielsweise 10 cm) der Abstand zum vorderen Begrenzungsobjekt dem Abstand zum hinteren Begrenzungsobjekt entspricht; dann wird das Zusteuern auf das vordere Begrenzungsobjekt beendet. In diesem Fall wird das Fahrzeug also in Längsrichtung im Wesentlichen mittig in der Längsparklücke ausgerichtet.

Vorzugsweise wird - sofern Fall 2 zutrifft und in der ausgerichteten Position der Abstand zu dem vorderen Begrenzungsobjekt kleiner bzw. kleiner gleich als der dritte Schwellwert ist - das Fahrzeug im Rahmen des Korrekturzugs solange in Rückwärtsrichtung von dem vorderen Begrenzungsobjekt wegsteuern, bis der Abstand zum vorderen Begrenzungsobjekt einen vierten Schwellwert (z. B. 0,7 m) erreicht. Der vierte Schwellwert (z. B. 0,7 m) ist hierbei größer als der dritte Schwellwert (z. B. 0,5 m), da sich das Fahrzeug in Rückwärtsrichtung von dem vorderen Begrenzungsobjekt wegbewegt. Wenn dieser vierte Schwellwert erreicht wird, wird das Wegsteuern von dem vorderen Begrenzungsobjekt beendet; das Fahrzeug kommt aber vorzugsweise nicht unmittelbar zum Stillstand, sondern wird sich aufgrund der Trägheit des Fahrzeugs nach Erreichen des vierten Schwellwerts noch um eine gewisse Strecke $\Delta s$ in Rückwärtsrichtung bewegen, beispielsweise um ca. 10 cm.

Der vierte Schwellwert ist vorzugsweise um 2- ∆s kleiner als der zweite Schwellwert. In diesem Fall kommt das Fahrzeug im Fall 1, wenn das Zusteuern auf das vordere Begrenzungsobjekt bei Erreichen des zweiten Schwellwerts (z. B. 0,9 m) beendet wird, und im Fall 2, wenn das Wegsteuern von dem vorderen Begrenzungsobjekt bei Erreichen des vierten Schwellwerts (z. B. 0,7 m) beendet wird, ungefähr bei dem gleichen End-Abstand (z. B. 0,8 m bei ∆s = 10 cm) zum vorderen Begrenzungsobjekt zum Stehen.

Für kleine Parklücken muss das Wegsteuern von dem vorderen Begrenzungsfahrzeug in Rückwärtsrichtung aber nicht erst bei Erreichen des vierten Schwellwerts beendet werden; stattdessen kann in kleinen Parklücken das Fahrzeug das Wegsteuern von dem vorderen Begrenzungsobjekt früher beenden, nämlich beispielsweise dann, wenn im Wesentlichen (d. h. unter optionaler Berücksichtigung einer Toleranz) der Abstand zum hinteren Begrenzungsobjekt kleiner als der Abstand zum vorderen Begrenzungsobjekt wird. In diesem Fall wird das Fahrzeug also in Längsrichtung im Wesentlichen mittig in der Längsparklücke ausgerichtet.

Vorzugsweise ist der dritte Schwellwert (beispielsweise 0,5 m) für das Wegsteuern von dem vorderen Begrenzungsobjekt in Rückwärtsrichtung kleiner als der erste Schwellwert (beispielsweise 1,1 m) für das Zusteuern auf das vorderen Begrenzungsobjekt in Vorwärtsrichtung, so dass sich ein Zwischenbereich zwischen dem ersten und dem zweiten Schwellwert ergibt.

Vorzugsweise wird für den Fall, dass der Abstand zu dem vorderen Begrenzungsobjekt kleiner gleich bzw. kleiner als der vorgegebene erste Schwellwert (z. B. 1,1 m) ist (d. h. Fall 1 nicht liegt vor), und zusätzlich der Abstand zu dem vorderen Begrenzungsobjekt größer gleich bzw. größer gleich als der dritte Schwellwert (0,5m) ist (d. h. Fall 2 liegt nicht vor), grundsätzlich kein Korrekturzug durchgeführt, um ein kurzes Anfahren in Vorwärtsrichtung bzw. Rückwärtsrichtung zu vermeiden.

Optional kann die Nichtdurchführung eines Korrekturzugs als zusätzliche kumulative Bedingung aber auch von dem Abstand zu dem hinteren Begrenzungsobjekt in der ausgerichteten Position abhängen. Beispielsweise kann in der ausgerichteten Position geprüft werden, ob der Abstand zu dem hinteren Begrenzungsobjekt größer oder größer gleich als ein fünfter Schwellwert ist (z. B. 0,4 m; der fünfte Schwellwert ist vorzugsweise kleiner als der dritte Schwellwert) und bei Nichtvorliegen von Fall 1 und Fall 2 und Vorliegen dieser kumulativen Bedingung (dieser Fall wird im Folgenden als Fall 4 bezeichnet) die Durchführung des Korrekturzugs unterbunden werden. Wenn sich hingegen das Fahrzeug nah dem hinteren Begrenzungsobjekt befindet und damit der Abstand zu dem hinteren Begrenzungsobjekt kleiner gleich bzw. kleiner als der fünfte Schwellwert ist und Fall 1 und Fall 2 nicht vorliegen (dieser Fall wird im Folgenden als Fall 3 bezeichnet), wird das Fahrzeug im Rahmen des Korrekturzugs in Vorwärtsrichtung von dem hinteren Begrenzungsobjekt wegsteuert, bis im Wesentlichen der Abstand zum hinteren Begrenzungsobjekt dem Abstand zum vorderen Begrenzungsobjekt entspricht oder größer als dieser ist. Im Fall 3 liegt typischerweise eine kleine Parklücke vor, bei der ein gewünschter End-Abstand von beispielsweise 0,8 m zum vorderen Begrenzungsobjekt nicht erreicht werden kann, ohne dass das eigene Fahrzeug sehr nah an dem hinteren Begrenzungsobjekt seine Parkendposition erreicht; in diesem Fall wird das Fahrzeug in Längsrichtung im Wesentlichen mittig in der Längsparklücke ausgerichtet.

Ein zweiter Aspekt der Erfindung betrifft ein Parkassistenzsystem zum Durchführen eines automatisierten Einparkvorgangs eines Kraftfahrzeugs in eine Längsparklücke. Das Parkassistenzsystem umfasst Querführungsmittel zur selbstständigen Steuerung der Querbewegung des Fahrzeug und Längsführungsmittel zur selbstständigen Steuerung der Längsbewegung des Fahrzeugs. Die Querführungsmittel und Längsführungsmittel können sich in unterschiedlichen Steuergeräten befinden, die über einen Fahrzeugbus miteinander kommunizieren; diese können aber auch in einem Steuergerät integriert sein. Das Parkassistenzsystem ist eingerichtet, das Fahrzeug in einem oder mehreren Zügen in eine Position in der Längsparklücke zu bewegen, bei der das Fahrzeug in Längsrichtung im Wesentlichen parallel zu einer seitlichen Begrenzungslinie der Längsparklücke ausgerichtet ist und einen zulässigen Abstand zur seitlichen Begrenzungslinie der Längsparklücke aufweist. Ferner ist das Parkassistenzsystem eingerichtet, in dieser ausgerichteten Position den Abstand zu einem vorderen Begrenzungsobjekt der Parklücke zu bestimmen und abstandsabhängig das Fahrzeug einen zusätzlicher Korrekturzug durchführen zu lassen, bei dem sich das Fahrzeug mit einem Lenkwinkel von im Wesentlichen null Grad in Vorwärtsrichtung oder Rückwärtsrichtung selbstständig gesteuert bewegt.

Die vorstehenden Ausführungen zum erfindungsgemäßen Verfahren nach dem ersten Aspekt der Erfindung gelten in entsprechender Weise auch für das erfindungsgemäße Parkassistenzsystem nach dem zweiten Aspekt der Erfindung. An dieser Stelle nicht explizit beschriebene vorteilhafte Ausführungsbeispiele des erfindungsgemäßen Parkassistenzsystems entsprechen den beschriebenen vorteilhaften Ausführungsbeispielen des erfindungsgemäßen Verfahrens.

Die Erfindung wird nachfolgend unter Zuhilfenahme auf die beigefügten Zeichnungen anhand eines Ausführungsbeispiels beschrieben. In diesen zeigen:

Fig. 1    ein Ausführungsbeispiel des erfindungsgemäßen Verfahren; und

Fig. 2    eine typische Einparksituation in einer Längsparklücke in der Draufsicht.

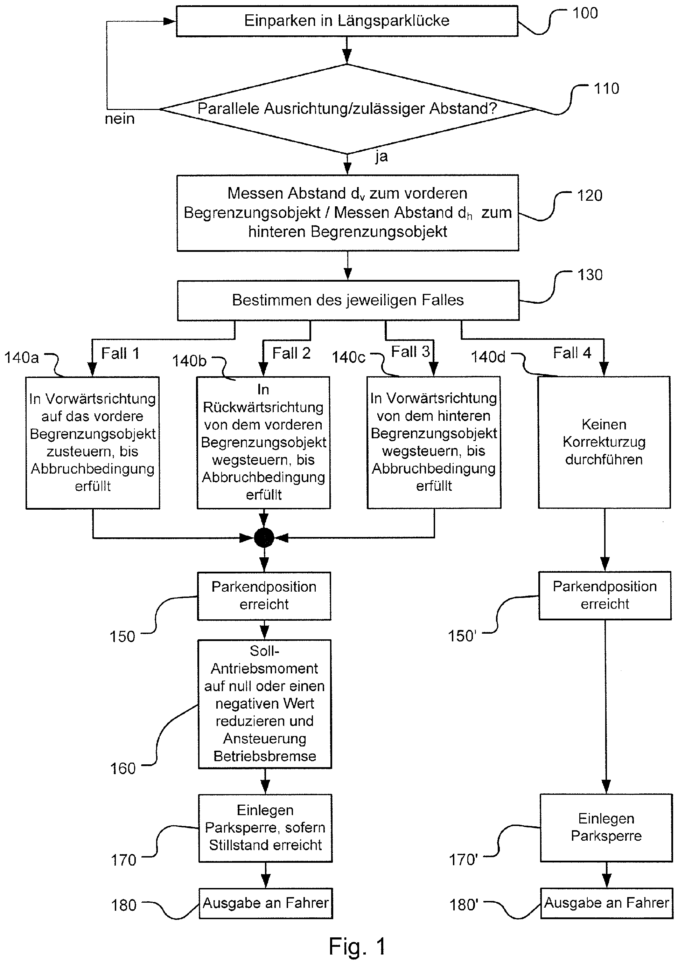

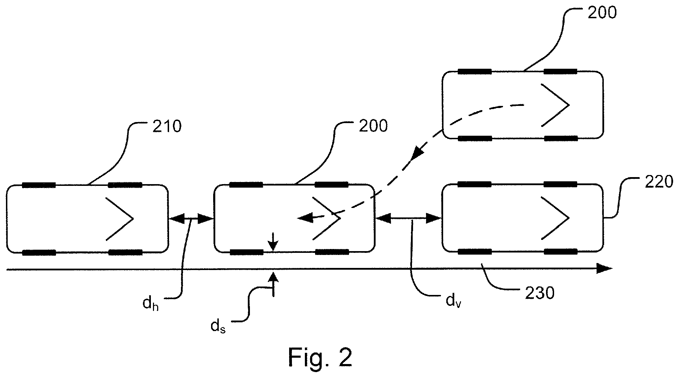

In Fig. 1 ist ein Ausführungsbeispiel des erfindungsgemäßen Verfahrens zum Durchführen eines automatisierten Einparkvorgangs eines Kraftfahrzeugs in einer Längsparklücke dargestellt. Hierbei wird ein Parkassistenzsystem mit automatisierter Quer- und Längsführung eingesetzt. Fig. 2 zeigt den Einparkvorgang in der Draufsicht.

Ein beispielhaftes Parkassistenzsystem mit automatisierter Quer- und Längsführung ist in der Druckschrift "Parkassistent mit Längs- und Querführung", Dirk Ahrens, 5. Tagung Fahrerassistenz der TU München, München, 2012 beschrieben. Die Querführung erfolgt über ein erstes Steuergerät und die Längsführung erfolgt über ein zweites Steuergerät, die über einen Fahrzeugbus miteinander kommunizieren. Der Offenbarungsgehalt dieser Druckschrift zur prinzipiellen Funktionsweise dieser Parkassistenzsystems mit automatisierter Quer- und Längsführung wird hiermit durch Bezugnahme in den Offenbarungsgehalt der vorliegenden Anmeldung aufgenommen.

In der manuellen Vorbeifahrt eines Fahrzeugs 200 an parkenden Fahrzeugen 210, 220 wird mittels einer seitlichen Sensorik eine geeignete Parklücke gefunden und diese dem Fahrer in einem Display im Fahrzeug optisch angezeigt. Der Fahrer bestätigt dann die gefundene Parklücke. Wenn sich der Fahrer in einem gültigen Startkorridor neben dem vorderen Begrenzungsobjekt 220 befindet, von dem es aus eine mögliche Fahrtrajektorie in eine gültige Parkendposition gibt, erfolgt eine Freigabe des Parkmanövers durch Betätigung eines Bedienelements. Nach Betätigen des Bedienelements parkt das Fahrzeug 200 selbstständig in einem oder mehreren Zügen in die Längsparklücke ein (s. Schritt 100 in Fig. 1). Die gestrichelte Linie in Fig. 2 entspricht der Fahrtrajektorie während des Einparkvorgangs.

Das Fahrzeug 200 prüft gemäß Schritt 110, ob das Fahrzeug 200 in Längsrichtung im Wesentlichen parallel zu einer seitlichen Begrenzungslinie 230 der Längsparklücke ausgerichtet ist und einen zulässigen Abstand zur seitlichen Begrenzungslinie aufweist Die seitliche Begrenzungslinie 230 wird beispielsweise wie in Fig. 2 durch den Bordstein oder alternativ durch die rechte Seite des vorderen Begrenzungsfahrzeugs 220 gebildet wird. Beispielsweise ist der Abstand $d_s$ zu einem Bordstein als seitliche Begrenzungslinie 230 dann zulässig, wenn dieser in einem vorgegebenen Bereich liegt, beispielsweise im Bereich von 10 bis 60 cm. Das Fahrzeug ist während der Prüfung in Schritt 110 vorzugsweise noch in Bewegung und kommt erst eine kurze Strecke später (beispielsweise 10 cm später) in den Stillstand. Im Stillstand ist das Fahrzeug dann in Längsrichtung im Wesentlichen parallel zu einer seitlichen Begrenzungslinie 230 der Längsparklücke ausgerichtet und weist einen zulässigen Abstand zur seitlichen Begrenzungslinie auf.

Kurz vor der Prüfung in Schritt 110 oder vor Erreichen der ausgerichteten Stillstandsposition wird ein Soll-Lenkwinkel von 0° vorgegeben, dieser wird jedoch häufig bis zum Stillstand noch nicht erreicht, so dass der Ist-Lenkwinkel im Stillstand häufig einen geringe Abweichung gegenüber 0° aufweist.

Wenn die ausgerichtete Stillstandsposition nach Anhalten des Fahrzeugs 200 erreicht wurde, bestimmt in Schritt 120 eine Sensorik des Fahrzeugs 200 (beispielsweise eine Ultraschall-Sensorik an der Front und am Heck des Fahrzeugs) den Abstand $d_v$ zum vorderen Begrenzungsobjekt 220 und den Abstand $d_h$ zum hinteren Begrenzungsobjekt 210. Bei den Begrenzungsobjekten 210, 220 handelt es sich im Beispiel von Fig. 2 um Fahrzeuge, alternativ kann aber ein anderes vorderes bzw. hinteres Begrenzungsobjekt vorliegen.

In Schritt 130 wird in Abhängigkeit des Abstands $d_v$ zum vorderen Begrenzungsobjekt 220 und des Abstands $d_h$ zum hinteren Begrenzungsobjekt 210 festgestellt, welcher der Fälle 1 - 4 vorliegt. In den Fällen 1 bis 3 wird ein Korrekturzug mit einem Lenkwinkel von 0° zum Ausrichten des Fahrzeugs in Längsrichtung durchgeführt. Im Fall 4 wird kein Korrekturzug durchgeführt.

Im Fall 1 ist der Abstand $d_v$ zum vorderen Begrenzungsobjekt 220 größer als ein Schwellwert $S_1$, der hier beispielsweise dem Wert $S_1 = 1,1$ m entspricht, d. h.

$$\text{Fall 1: } d_v > S_1 = 1,1 \text{ m} .$$

Im Fall 2 ist der Abstand $d_v$ zum vorderen Begrenzungsobjekt 220 kleiner als ein Schwellwert $S_3$, der hier beispielsweise dem Wert $S_3 = 0,5$ m entspricht, d. h.

$$\text{Fall 2: } d_v < S_3 = 0,5 \text{ m} .$$

Im Fall 3 ist der Abstand $d_v$ zum vorderen Begrenzungsobjekt 220 kleiner gleich dem Schwellwert $S_1$ und größer gleich dem Schwellwert $S_3$, während der Abstand $d_h$ zum hinteren Begrenzungsobjekt 230 kleiner einem Schwellwert $S_5$ ist, der hier beispielsweise dem Wert $S_5 = 0,4$ m entspricht, d. h.

$$\text{Fall 3: } d_v \leq S_1 = 1,1 \text{ m} \wedge d_v \geq S_1 = 0,5 \text{ m} \wedge d_h < S_5 = 0,4 \text{ m} .$$

Im Fall 4 ist der Abstand $d_v$ zum vorderen Begrenzungsobjekt 220 kleiner gleich dem Schwellwert $S_1$ und

größer gleich dem Schwellwert $S_3$, während der Abstand $d_h$ zum hinteren Begrenzungsobjekt 230 größer gleich dem Schwellwert $S_5$ ist, d. h.

$$\text{Fall 4: } d_v \leq S_1 = 1{,}1 \text{ m} \wedge d_v \geq S_1 = 0{,}5 \text{ m} \wedge d_h \geq S_5 = 0{,}4 \text{ m} .$$

Im Fall 1 ist ein sehr großer Abstand $d_v$ zum vorderen Begrenzungsobjekt 220 gegeben und es wird unnötig Parkraum verschwendet. Im Fall 1 fährt in Schritt 140a das Fahrzeug 200 in Vorwärtsrichtung mit einem Lenkwinkel von 0° in einem einzigen Korrekturzug auf das vordere Begrenzungsobjekt 220 auf, bis eine Abbruchbedingung erfüllt ist. Der Soll-Lenkwinkel beträgt während der gesamten Vorwärtsbewegung exakt 0°; mit Beginn der Vorwärtsbewegung ist der Ist-Lenkwinkel möglicherweise aber noch leicht von 0° verschieden und richtet sich erst im Anfangsbereich des Korrekturzugs vollständig auf den Soll-Lenkwinkel von 0° aus. Zum Prüfen der Abbruchbedingung werden während der Bewegung laufend der aktuelle Abstand zum vorderen Begrenzungsobjekt 220 und der aktuelle Abstand zum hinteren Begrenzungsobjekt 210 bestimmt.

Eine erste Abbruchbedingungen für den Fall 1 ist gegeben, wenn der aktuelle Abstand $d_v$ zu dem vorderen Begrenzungsfahrzeug einen Schwellwert $S_2$ erreicht hat, der hier zu $S_2 = 0{,}9$ m gewählt wird, und gleichzeitig der aktuelle Abstand $d_h$ zu dem hinteren Begrenzungsfahrzeug 210 zuzüglich eines Toleranzwerts T größer als der aktuelle Abstand $d_v$ zu dem vorderen Begrenzungsobjekt 220 ist (hier T = 0,1 m; der Toleranzwert entspricht im Allgemeinen der unten diskutierten Strecke $\Delta s$, die durch die Fahrzeugträgheit noch zurückgelegt wird bis der Stillstand erreicht wird), d. h.

$$d_v = S_2 = 0{,}9 \text{ m} \wedge d_h + T > d_v$$

In diesem Fall wird das Zusteuern auf das vordere Begrenzungsobjekt beendet und der Zustand der Parkendposition erreicht (s. Schritt 150). Sofern der Zustand der Parkendposition erreicht wurde, wird das Soll-Antriebsmoment auf null oder beispielsweise auf einen negativen Wert reduziert und die Betriebsbremse zwecks Stopp des Fahrzeugs angesteuert (s. Schritt 160). Das Fahrzeug wird sich nach Erreichen des Zustands der Parkendposition aufgrund der Trägheit noch um eine gewisse Strecke $\Delta s$ in Vorwärtsrichtung bewegen, beispielsweise um ca. 10 cm, und dann mit einem Abstand $d_v = S_2 - \Delta s = 0{,}8$ m zum vorderen Begrenzungsobjekt den Stillstand erreichen. Wenn der Stillstand erreicht ist, wird die Parksperre eingeschaltet (s. Schritt 170) und eine optische Ausgabe an den Fahrer ausgelöst (s. Schritt 180), die das Beenden des Einparkvorgangs signalisiert.

Sofern im Fall einer kleineren Parklücke die erste Abbruchbedingung bei einem Abstand $d_v = 0{,}9$ m nicht erfüllt ist, da zu diesem Zeitpunkt $d_h + T \leq d_v$ gilt (d. h. der Abstand $d_h$ zum hinteren Begrenzungsobjekt 210 zuzüglich des Toleranzwert T ist kleiner gleich dem Abstand $d_v$ zum vorderen Begrenzungsobjekt 220), wird später (d. h. wenn $d_v$ den Schwellwert $S_2 = 0{,}9$ m unterschritten hat) eine zweite Abbruchbedingung für den Fall 1 erfüllt; diese zweite Abbruchbedingung lautet:

$$d_v < S_2 = 0{,}9 \text{ m} \wedge d_h + T = d_v$$

Sofern der Abstand $d_v$ zum vorderen Begrenzungsobjekt 220 also den Schwellwert $S_2$ unterschritten hat und der Abstand $d_h$ zum hinteren Begrenzungsobjekt 210 zuzüglich des Toleranzwerts T dem Abstand $d_v$ zum vorderen Begrenzungsobjekt 220 entspricht, wird das Zusteuern auf das Zusteuern auf das vordere Begrenzungsobjekt 220 beendet, und es werden die vorstehend beschriebenen Schritte 150 bis 180 durchlaufen. Die zweite Abbruchbedingung für den Fall 1 wird typischerweise dann erfüllt, wenn die Parklücke eine geringe Länge aufweist. Das Fahrzeug kommt dann im Wesentlichen mittig in der Parklücke in den Stillstand.

Im Fall 2 ist nach Erreichen der ausgerichteten Stillstandsposition ein geringer Abstand $d_v$ zum vorderen Begrenzungsobjekt 220 gegeben ($d_v < S_3 = 0{,}5$ m). Um ein leichtes Ausparken zu gewährleisten, fährt im Fall 2 in Schritt 140b das Fahrzeug 200 in einem einzigen Korrekturzug in Rückwärtsrichtung mit einem Lenkwinkel von 0° von dem vordere Begrenzungsobjekt 220 weg, bis eine Abbruchbedingung erfüllt ist. Beim Wegfahren vom vorderen Begrenzungsfahrzeug 220 nimmt der Abstand $d_v$ zum vorderen Begrenzungsobjekt 220 zu. Zum Prüfen der Abbruchbedingung werden während der Bewegung laufend der aktuelle Abstand $d_v$ zum vorderen Begrenzungsobjekt 220 und der aktuelle Abstand $d_h$ zum hinteren Begrenzungsobjekt 210 bestimmt.

Eine erste Abbruchbedingungen für den Fall 2 ist erfüllt, wenn der aktuelle Abstand $d_h$ zu dem hinteren Begrenzungsfahrzeug 210 minus dem Toleranzwert T kleiner als der Abstand $d_v$ zu dem vorderen Begrenzungsobjekt 220 ist, sofern der Abstand $d_v$ zu dem vorderen Begrenzungsobjekt kleiner als ein Schwellwert $S_4$ ist, der hier beispielsweise zu $S_4 = 0{,}7$ m gewählt wird, d. h.

$$d_v < S_4 = 0{,}7 \text{ m} \wedge d_h - T < d_v$$

Da sich das Fahrzeug im Fall 2 rückwärts bewegt, wird der Abstand $d_h$ nach Erreichen der ersten Abbruchbedingung noch eine kurze Strecke $\Delta s$ verkürzt. Indem der Toleranzwert T von dem Abstand $d_h$ subtrahiert wird, wird die Abbruchbedingung früher ausgelöst.

Diese erste Abbruchbedingung für den Fall 2 wird typischerweise in kleineren Parklücken erfüllt, wenn nicht genügend Abstand zum hinteren Begrenzungsobjekt 210 vorliegt. Bei Erfüllen der ersten Abbruchbedingung für den Fall 2 wird das Wegsteuern von dem vorderen Begrenzungsobjekt 220 beendet, und es werden die vorstehend beschriebenen Schritte 150 bis 180 durchlaufen. Die erste Abbruchbedingung für den Fall 2 wird typischerweise dann erfüllt, wenn die Parklücke eine geringe Länge aufweist. Das Fahrzeug kommt dann im Wesentlichen mittig in der Parklücke in den Stillstand.

Sofern im Fall einer größeren Parklücke die erste Abbruchbedingung für den Fall 2 nicht erfüllt wird, wird eine zweite Abbruchbedingung für den Fall 2 erfüllt; diese zweite Abbruchbedingung lautet:

$$d_v = S_4 = 0{,}7 \text{ m}.$$

Sofern also der Abstand $d_v$ zum vorderen Begrenzungsfahrzeug auf den Schwellwert $S_4 = 0{,}7$ m angestiegen ist, wird das Wegsteuern von dem vorderen Begrenzungsfahrzeug 220 beendet, und das Fahrzeug 200 kommt nach ungefähr einer Strecke $\Delta s = 0{,}1$ m zum Stillstand, so dass sich ungefähr ein Endabstand $d_v$ zum vorderen Begrenzungsobjekt 220 von $d_v = S_4 + 0{,}1$ m $= 0{,}8$ m ergibt.

Im Fall 3 ist der Abstand $d_v$ zum vorderen Begrenzungsfahrzeug 220 kleiner als im Fall 1 und größer als im Fall 2 und gleichzeitig das Fahrzeug 200 nah am hinteren Begrenzungsobjekt 210. Das Fahrzeug wird dann gemäß Schritt 140c in Vorwärtsrichtung von dem hinteren Begrenzungsobjekt weggesteuert, bis eine Abbruchbedingung erfüllt ist.

Die Abbruchbedingung wird hier erfüllt, wenn der Abstand $d_h$ zu dem hinteren Begrenzungsobjekt 210 zuzüglich des Toleranzwerts T größer als der Abstand $d_v$ zu dem vorderen Begrenzungsobjekt 220 ist, d. h.

$$d_h + T > d_v$$

Wenn im Fall 4 der Abstand $d_v$ zum vorderen Begrenzungsobjekt 220 größer gleich $S_3 = 0{,}5$ m und kleiner gleich $S_1 = 1{,}1$ m ist, jedoch im Unterschied zu Fall 3 der Abstand $d_h$ zu dem hinteren Begrenzungsobjekt größer gleich dem Schwellwert $S_5$ ist (d. h. das Fahrzeug 200 befindet sich nicht so nah wie im Fall 3 am hinteren Begrenzungsobjekt 210), dann wird kein Korrekturzug durchgeführt (s. 140d in Fig. 2), um ein zu kurzes Anfahren zu vermeiden. Es wird dann festgestellt, dass die Parkendposition erreicht ist (s. Schritt 150' in Fig. 1) und darauf aufbauend die Parksperre eingelegt (s. Schritt 170') und eine Ausgabe an den Fahrer ausgelöst (s. Schritt 180'), dass der Parkvorgang abgeschlossen ist.

Bei dem Verfahren gemäß Fig. 1 kann ferner optional vorgesehen werden, dass nur dann ein Korrekturzug ausgelöst wird (s. Schritt 140a bis 140c), sofern nicht bereits bei Erreichen der ausgerichteten Stillstandsposition eine vorgegebene maximale Anzahl von Zügen erreicht wurde.

## Patentansprüche

**1.** Verfahren zum Durchführen eines automatisierten Einparkvorgangs eines Kraftfahrzeugs (200) in eine Längsparklücke, wobei das Fahrzeug die Längs- und Querbewegung des Fahrzeugs (200) selbstständig steuert und dabei das Fahrzeug (200) in einem oder mehreren Zügen in eine ausgerichtete Position in der Längsparklücke bewegt wird, bei der das Fahrzeug (200) in Längsrichtung im Wesentlichen parallel zu einer seitlichen Begrenzungslinie (230) der Längsparklücke ausgerichtet ist und einen zulässigen Abstand zur seitlichen Begrenzungslinie (230) der Längsparklücke aufweist, **dadurch gekennzeichnet, dass**

- in dieser ausgerichteten Position der Abstand ($d_v$) zu einem vorderen Begrenzungsobjekt (220) der Parklücke bestimmt wird und
- abstandsabhängig das Fahrzeug (200) einen zusätzlicher Korrekturzug durchführt, bei dem sich das Fahrzeug (200) mit einem Lenkwinkel von im Wesentlichen null Grad in Vorwärtsrichtung oder Rückwärtsrichtung selbstständig gesteuert bewegt, wobei im Rahmen des Korrekturzugs der Abstand ($d_v$) des Fahrzeugs (200) auf einen vorgegebenen Ziel-Abstand zum vorderen Begrenzungsobjekt (220) korrigiert wird.

2. Verfahren nach einem der vorhergehenden Ansprüche, wobei in Abhängigkeit des Abstand ($d_v$) zum vorderen Begrenzungsobjekt (220) entschieden wird, ob das Fahrzeug (200) in dem zusätzlichen Korrekturzug auf das vordere Begrenzungsobjekt (220) zugesteuert wird oder von dem vorderen Begrenzungsobjekt (220) weggesteuert wird.

3. Verfahren nach einem vorhergehenden Ansprüche, wobei in dieser ausgerichteten Position geprüft wird, ob in dieser ausgerichteten Position der Abstand ($d_v$) zu dem vorderen Begrenzungsobjekt (220) größer oder größer gleich als ein erster Schwellwert ist, und in diesem Fall das Fahrzeug (200) im Rahmen des Korrekturzugs in Vorwärtsrichtung selbstständig gesteuert auf das vordere Begrenzungsobjekt (220) zusteuert.

4. Verfahren nach Anspruch 3, wobei das Fahrzeug (200) im Rahmen des Korrekturzugs solange in Vorwärtsrichtung auf das vordere Begrenzungsobjekt (220) zusteuert,

   - bis der Abstand ($d_v$) zum vorderen Begrenzungsobjekt (220) einen zweiten Schwellwert erreicht, sofern gleichzeitig der Abstand ($d_h$) zu einem hinteren Begrenzungsobjekt (210) eine bestimmte Bedingung erfüllt.

5. Verfahren nach Anspruch 4, wobei das Fahrzeug (200) im Rahmen des Korrekturzugs nach Unterschreiten des zweiten Schwellwerts seitens des Abstands ($d_v$) zum vorderen Begrenzungsobjekt (220) in Vorwärtsrichtung auf das vordere Begrenzungsobjekt (220) zusteuert,

   - bis im Wesentlichen der Abstand ($d_v$) zum vorderen Begrenzungsobjekt (220) dem Abstand ($d_h$) zum hinteren Begrenzungsobjekt (210) entspricht.

6. Verfahren nach einem vorhergehenden Ansprüche, in dieser ausgerichteten Position geprüft wird, ob in dieser ausgerichteten Position der Abstand ($d_v$) zu dem vorderen Begrenzungsobjekt (220) kleiner oder kleiner gleich als ein vorgegebener dritter Schwellwert ist, und in diesem Fall das Fahrzeug (200) im Rahmen des Korrekturzugs selbstständig gesteuert in Rückwärtsrichtung von dem vorderen Begrenzungsobjekt (220) wegsteuert.

7. Verfahren nach Anspruch 6, wobei das Fahrzeug (200) im Rahmen des Korrekturzugs in Rückwärtsrichtung von dem vorderen Begrenzungsobjekt (220) wegsteuert,

   - bis der Abstand ($d_v$) zum vorderen Begrenzungsobjekt (220) einen vierten Schwellwert erreicht.

8. Verfahren nach Anspruch 7, wobei das Fahrzeug (200) im Rahmen des Korrekturzugs in Rückwärtsrichtung von dem vorderen Begrenzungsobjekt (220) wegsteuert,

   - bis im Wesentlichen der Abstand ($d_h$) zum hinteren Begrenzungsobjekt (210) dem Abstand ($d_v$) zum vorderen Begrenzungsobjekt (220) entspricht oder kleiner als dieser ist.

9. Verfahren nach einem vorhergehenden Ansprüche 3 bis 5 und einem der vorhergehenden Ansprüche 6 bis 8, wobei für den Fall, dass

   - in der ausgerichteten Position der Abstand ($d_v$) zu dem vorderen Begrenzungsobjekt (220) kleiner gleich bzw. kleiner als der vorgegebene erste Schwellwert ist, und
   - zusätzlich der Abstand ($d_v$) zu dem vorderen Begrenzungsobjekt (220) größer gleich bzw. größer als der dritte Schwellwert ist,
   - das Fahrzeug (200) im Rahmen des Korrekturzugs in Vorwärtsrichtung selbstständig gesteuert von dem hinteren Begrenzungsobjekt (210) wegsteuert, bis im Wesentlichen der Abstand ($d_h$) zum hinteren Begrenzungsobjekt (220) dem Abstand ($d_v$) zum vorderen Begrenzungsobjekt (220) entspricht oder größer als dieser ist, oder
   - kein Korrekturzug durchgeführt wird.

10. Verfahren nach Anspruch 9, wobei

    - für den Fall, dass

- in der ausgerichteten Position der Abstand ($d_v$) zu dem vorderen Begrenzungsobjekt (220) kleiner gleich bzw. kleiner als der vorgegebene erste Schwellwert ist, und
- zusätzlich der Abstand ($d_v$) zu dem vorderen Begrenzungsobjekt (220) größer gleich bzw. größer als der dritte Schwellwert ist, und
- zusätzlich der Abstand ($d_h$) zu dem hinteren Begrenzungsobjekt (210) größer gleich oder größer als ein fünfter Schwellwert ist, kein Korrekturzug durchgeführt wird, und

- für den Fall, dass

- in der ausgerichteten Position der Abstand ($d_v$) zu dem vorderen Begrenzungsobjekt (220) kleiner gleich bzw. kleiner als der vorgegebene erste Schwellwert ist, und
- zusätzlich der Abstand ($d_v$) zu dem vorderen Begrenzungsobjekt (220) größer gleich bzw. größer als der dritte Schwellwert ist, und
- zusätzlich der Abstand ($d_h$) zu dem hinteren Begrenzungsobjekt (210) kleiner bzw. kleiner gleich als der fünfter Schwellwert ist,

das Fahrzeug (200) im Rahmen des Korrekturzugs in Vorwärtsrichtung selbstständig gesteuert von dem hinteren Begrenzungsobjekt (210) wegsteuert, bis im Wesentlichen der Abstand ($d_h$) zum hinteren Begrenzungsobjekt (210) dem Abstand ($d_v$) zum vorderen Begrenzungsobjekt (220) entspricht oder größer als dieser ist.

11. Parkassistenzsystem zum Durchführen eines automatisierten Einparkvorgangs eines Kraftfahrzeugs (200) in eine Längsparklücke, wobei

- das Parkassistenzsystem Querführungsmittel zur selbstständigen Steuerung der Querbewegung des Fahrzeug (200) und Längsführungsmittel zur selbstständigen Steuerung der Längsbewegung des Fahrzeugs (200) umfasst,
- das Parkassistenzsystem eingerichtet ist, das Fahrzeug (200) in einem oder mehreren Zügen in eine ausgerichtete Position in der Längsparklücke zu steuern, bei der das Fahrzeug (200) in Längsrichtung im Wesentlichen parallel zu einer seitlichen Begrenzungslinie (230) der Längsparklücke ausgerichtet ist und einen zulässigen Abstand zur seitlichen Begrenzungslinie (230) der Längsparklücke aufweist, und **dadurch gekennzeichnet, dass**
- das Parkassistenzsystem ferner eingerichtet ist,
- in dieser ausgerichteten Position den Abstand ($d_v$) zu einem vorderen Begrenzungsobjekt (220) der Parklücke zu bestimmen und
- abstandsabhängig das Fahrzeug (200) einen zusätzlicher Korrekturzug durchführen zu lassen, bei dem sich das Fahrzeug (200) mit einem Lenkwinkel von im Wesentlichen null Grad in Vorwärtsrichtung oder Rückwärtsrichtung selbstständig gesteuert bewegt und der Abstand ($d_v$) des Fahrzeugs (200) auf einen vorgegebenen Ziel-Abstand zum vorderen Begrenzungsobjekt (220) korrigiert wird.

**Claims**

1. A method for carrying out an automated parking procedure of a motor vehicle (200) in a parallel parking space, wherein the vehicle controls the longitudinal and transverse movement of the vehicle (200) automatically and in so doing the vehicle (200) is moved in one or more moves into an oriented position in the parallel parking space, in which the vehicle (200) is oriented in the longitudinal direction substantially parallel to a lateral boundary line (230) of the parallel parking space and is at an admissible distance from the lateral boundary line (230) of the parallel parking space,
**characterised in that**

- in this oriented position, the distance ($d_v$) from a bounding object (220) at the front of the parking space is determined, and
- depending on the distance, the vehicle (200) carries out an additional corrective move, in which the vehicle (200) moves in the forward direction or rearward direction under automatic control with a steering angle of substantially zero degrees, wherein within the scope of the corrective move the distance ($d_v$) of the vehicle (200) is corrected to a predefined target distance from the bounding object (220) at the front.

2. A method according to any one of the preceding claims, wherein, depending on the distance ($d_v$) from the bounding

object (220) at the front, a decision is made as to whether the vehicle (200) in the additional corrective move is directed towards the bounding object (220) at the front or is directed away from the bounding object (220) at the front.

3. A method according to any one of the preceding claims, wherein, in this oriented position, it is checked whether, in this oriented position, the distance ($d_v$) from the bounding object (220) at the front is greater than or equal to a first threshold value, and if this is the case the vehicle (200) is directed in the forward direction towards the bounding object (220) at the front under automatic control within the scope of the corrective move.

4. A method according to claim 3, wherein the vehicle (200) is directed in the forward direction towards the bounding object (220) at the front within the scope of the corrective move

- until the distance ($d_v$) from the bounding object (220) at the front reaches a second threshold value, provided at the same time the distance ($d_h$) from a bounding object (210) at the rear satisfies a specific condition.

5. A method according to claim 4, wherein, once the distance ($d_v$) from the bounding object (220) at the front has fallen below the second threshold value, the vehicle (200) is directed in the forward direction towards the bounding object (220) at the front within the scope of the corrective move

- until the distance ($d_v$) from the bounding object (220) at the front corresponds substantially to the distance ($d_h$) from the bounding object (210) at the rear.

6. A method according to any one of the preceding claims, wherein, in this oriented position, it is checked whether, in this oriented position, the distance ($d_v$) from the bounding object (220) at the front is less than or less than or equal to a predefined third threshold value, and if this is the case the vehicle (200) is directed in the rearward direction away from the bounding object (220) at the front under automatic control within the scope of the corrective move.

7. A method according to claim 6, wherein the vehicle (200) is directed in the rearward direction away from the bounding object (220) at the front within the scope of the corrective move

- until the distance ($d_v$) from the bounding object (220) at the front reaches a fourth threshold value.

8. A method according to claim 7, wherein the vehicle (200) is directed in the rearward direction away from the bounding object (220) at the front within the scope of the corrective move

- until the distance ($d_h$) from the bounding object (210) at the rear corresponds substantially to the distance ($d_v$) from the bounding object (220) at the front or is less than this.

9. A method according to any one of preceding claims 3 to 5 and one of the preceding claims 6 to 8, wherein, if,

- in the oriented position, the distance ($d_v$) from the bounding object (220) at the front is less than or equal to or less than the predefined first threshold value, and
- in addition the distance ($d_v$) from the bounding object (220) at the front is greater than or equal to or greater than the third threshold value,
- the vehicle (200) is directed away from the bounding object (210) at the rear under automatic control within the scope of the corrective move until the distance ($d_h$) from the bounding object (220) at the rear corresponds substantially to the distance ($d_v$) from the delimiting object (220) at the front or is greater than this, or
- no corrective move is carried out.

10. A method according to claim 9, wherein

- if,

- in the oriented position, the distance ($d_v$) from the bounding object (220) at the front is less than or equal to or less than the predefined first threshold value, and
- in addition the distance ($d_v$) from the bounding object (220) at the front is greater than or equal to or greater than the third threshold value, and
- in addition the distance ($d_h$) from the bounding object (210) at the rear is greater than or equal to or greater than a fifth threshold value, no corrective move is carried out, and

- if,

- in the oriented position, the distance ($d_v$) from the bounding object (220) at the front is less than or equal to or less than the predefined first threshold value, and
- in addition the distance ($d_v$) from the bounding object (220) at the front is greater than or equal to or greater than the third threshold value, and
- in addition the distance ($d_h$) from the bounding object (210) at the rear is less than or less than or equal to the fifth threshold value,

the vehicle (200), within the scope of the corrective move, is directed in the forward direction away from the bounding object (210) at the rear under automatic control until the distance ($d_h$) from the bounding object (210) at the rear corresponds substantially to the distance ($d_v$) from the bounding object (220) at the front or is greater than this.

11. A parking assistance system for carrying out an automated parking procedure of a motor vehicle (200) in a parallel parking space,
wherein

- the parking assistance system comprises transverse guide means for automatically controlling the transverse movement of the vehicle (200) and longitudinal guide means for automatically controlling the longitudinal movement of the vehicle (200),
- the parking assistance system is designed to control the vehicle (200) in one or more moves into an oriented position in the parallel parking space, in which the vehicle (200) is oriented in the longitudinal direction substantially parallel to a lateral boundary line (230) of the parallel parking space and is at an admissible distance from the lateral boundary line (230) of the parallel parking space, and

**characterised in that**

- the parking assistance system is also designed,
- in this oriented position, to determine the distance ($d_v$) from a bounding object (220) at the front of the parking space and,
- depending on the distance, to allow the vehicle (200) to carry out an additional corrective move, in which the vehicle (200) moves in the forward direction or rearward direction under automatic control with a steering angle of substantially zero degrees and the distance ($d_v$) of the vehicle (200) is corrected to a predefined target distance from the bounding object (220) at the front.

**Revendications**

1. Procédé permettant la mise en oeuvre d'un processus de positionnement automatisé d'un véhicule (200) dans un emplacement de stationnement longitudinal, le véhicule (200) commandant de façon autonome son déplacement longitudinal et transversal, et étant déplacé en une ou plusieurs manoeuvres dans une position orientée dans l'emplacement de stationnement longitudinal, dans laquelle le véhicule (200) est orienté en direction longitudinale essentiellement parallèlement à une ligne de limitation latérale (230) de l'emplacement de stationnement longitudinal et à une distance admissible de cette ligne de limitation latérale (230) de l'emplacement de stationnement longitudinal, **caractérisé en ce que**

- dans cette position orientée, sa distance ($d_v$) d'un objet de limitation avant (220) de l'emplacement de stationnement est déterminée, et
- en fonction de cette distance, le véhicule (200) exécute une manoeuvre de correction supplémentaire par laquelle il se déplace en étant commandé de manière autonome avec un angle de braquage essentiellement nul en direction avant ou en direction arrière, lors de la manoeuvre de correction, la distance ($d_v$) du véhicule (200) de l'objet de limitation avant (220) étant corrigée pour correspondre à une distance cible prédéfinie.

2. Procédé conforme à la revendication précédente,
selon lequel en fonction de sa distance ($d_v$) de l'objet de limitation avant (220) il est décidé si, lors de la manoeuvre de correction supplémentaire, le véhicule (200) doit être commandé pour se rapprocher de l'objet de limitation avant (220) ou pour s'en éloigner.

**3.** Procédé conforme à l'une des revendications précédentes, **caractérisé en ce que**,
dans la position orientée, il est vérifié si, sa distance ($d_v$) de l'objet de limitation avant (220) est supérieure ou égale à une première valeur de seuil, et dans ce cas, lors de la manoeuvre de correction, le véhicule (200) est commandé de façon autonome en direction avant vers l'objet de limitation avant (220).

**4.** Procédé conforme à la revendication 3,
selon lequel, lors de la manoeuvre de correction, le véhicule (200) est commandé dans la direction avant vers l'objet de limitation avant (220),

- jusqu'à ce que sa distance ($d_v$) de l'objet de limitation avant (220) atteigne une seconde valeur de seuil, dans la mesure où simultanément sa distance ($d_h$) d'un objet de limitation arrière (210) remplit une condition définie.

**5.** Procédé conforme à la revendication 4,
selon lequel, lors de la manoeuvre de correction, après être passé au-dessous de la seconde valeur de seuil de sa distance ($d_v$) de l'objet de limitation avant (220), le véhicule (200) est commandé pour se déplacer en direction avant vers l'objet de limitation avant (220),

- jusqu'à ce que sa distance (dv) de l'objet de limitation avant (220) corresponde essentiellement à sa distance ($d_h$) de l'objet de limitation arrière (210).

**6.** Procédé conforme à l'une des revendications précédentes, selon lequel dans la position orientée, il est vérifié si sa distance ($d_v$) de l'objet de limitation avant (220) est inférieure ou égale à une troisième valeur de seuil prédéfinie, et dans ce cas, lors de la manoeuvre de correction, le véhicule (200) est commandé de façon autonome vers l'arrière pour s'éloigner de l'objet de limitation avant (220).

**7.** Procédé conforme à la revendication 6,
selon lequel, lors de la manoeuvre de correction, le véhicule (200) est commandé en direction arrière pour s'éloigner de l'objet de limitation avant (220),

- jusqu'à ce que sa distance (dv) de l'objet de limitation avant (220) atteigne une quatrième valeur de seuil.

**8.** Procédé conforme à la revendication 7,
selon lequel lors de la manoeuvre de correction, le véhicule (200) est commandé en direction arrière pour s'éloigner de l'objet de limitation avant (220),

- jusqu'à ce que sa distance ($d_h$) de l'objet de limitation arrière (210) corresponde essentiellement à sa distance ($d_v$) de l'objet de limitation avant (220) ou soit inférieure à celle-ci.

**9.** Procédé conforme à l'une des revendications 3 à 5 et à l'une des revendications 6 à 8,
selon lequel, dans le cas où

- dans la direction orientée, sa distance ($d_v$) de l'objet de limitation avant (220) est égale ou inférieure à la première valeur de seuil prédéfinie et que
- en outre, sa distance ($d_v$) de l'objet de limitation avant (220) est supérieure ou égale à la troisième valeur de seuil,
- lors de la manoeuvre de correction, le véhicule (200) est commandé de façon autonome en direction avant pour s'éloigner de l'objet de limitation arrière (210) jusqu'à ce que sa distance ($d_h$) de l'objet de limitation arrière (220) corresponde essentiellement à sa distance ($d_v$) de l'objet de limitation avant (220) ou soit supérieure à celuici, ou
- aucune manoeuvre de correction n'est effectuée.

**10.** Procédé conforme à la revendication 9,
selon lequel
dans le cas où

- dans la position orientée, sa distance (dv) de l'objet de limitation avant (220) est égale ou inférieure à la première valeur de seuil prédéfinie et qu'en outre,
- sa distance ($d_v$) de l'objet de limitation avant (220) est égale ou supérieure à la troisième valeur de seuil, et qu'en outre,

- sa distance ($d_h$) de l'objet de limitation arrière (210) est égale ou supérieure à une cinquième valeur de seuil,
- aucune manoeuvre de correction n'est effectuée, et
- dans le cas où
- dans la position orientée, sa distance ($d_v$) par rapport à l'objet de limitation avant (220) est égale ou inférieure à la première valeur de seuil prédéfinie et qu'en outre,
- sa distance ($d_v$) de l'objet de limitation avant (220) est égale ou supérieure à la troisième valeur de seuil, et qu'en outre
- sa distance ($d_h$) de l'objet de limitation arrière (210) est inférieure ou égale à la cinquième valeur de seuil,

lors de la manoeuvre de correction,
le véhicule (200) est commandé de façon autonome en direction avant pour s'éloigner de l'objet de limitation arrière (210) jusqu'à ce que sa distance ($d_h$) de l'objet de limitation arrière (210) corresponde essentiellement à sa distance ($d_v$) de l'objet de limitation avant (220) ou soit supérieure à celle-ci.

11. Système d'assistance au stationnement permettant la mise en oeuvre d'un processus de positionnement automatisé d'un véhicule (200) dans un emplacement de stationnement longitudinal dans lequel

- le système d'assistance au stationnement comprend des moyens de guidage transversal permettant une commande autonome du déplacement transversal du véhicule (200) et des moyens de guidage longitudinal permettant une commande autonome du déplacement longitudinal du véhicule (200),
- le système d'assistance au stationnement est susceptible de commander le déplacement du véhicule (200), en une ou plusieurs manoeuvres pour le positionner dans une position orientée dans l'emplacement de stationnement longitudinal, dans laquelle le véhicule (200) est orienté en direction longitudinale essentiellement parallèlement à une ligne de limitation latérale (230) de l'emplacement de stationnement longitudinal et à une distance admissible de cette ligne de limitation latérale (230) de l'emplacement de stationnement longitudinal,

**caractérisé en ce que**

- dans la position orientée le système d'assistance au stationnement est en outre susceptible, de déterminer la distance (dv) du véhicule d'un objet de limitation avant (220) de l'emplacement de stationnement, et
- en fonction de cette distance de permettre au véhicule (200) d'effectuer une manoeuvre de correction supplémentaire par laquelle il est déplacé en étant commandé de manière autonome avec un angle de braquage essentiellement nul en direction avant ou en direction arrière, et la distance ($d_v$) du véhicule (200) de l'objet de limitation avant (220) est corrigée pour correspondre à une distance cible prédéfinie.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006050710 A
- DE 102011084479